# EUROPÄISCHE PATENTSCHRIFT

(11) **EP 1 739 120 B1**
(45) Veröffentlichungstag und Bekanntmachung des Hinweises auf die Patenterteilung: **31.12.2008**
(21) Anmeldenummer: 06115457.1
(22) Anmeldetag: 14.06.2006
(51) Int. Cl.: C08K 3/04

(54) **Polyurethan-Graphitoxid-Verbundmaterial, Verfahren zu seiner Herstellung und seine Verwendung als Flammschutz-Material und zur Brandschutzabdichtung**
Polyurethane graphite oxide composites, process of manufacture and use as flame retardant in fire proof seals
Composite de polyurethanne et oxid de graphite, procédé de manufacture et utilisation comme agent ignifuge dans des joints d'etanchéité coupe feu

(30) Priorität: 28.06.2005 DE 102005029997
(43) Veröffentlichungstag der Anmeldung: 03.01.2007
(73) Patentinhaber: HILTI Aktiengesellschaft, 9494 Schaan (LI)
(72) Erfinder: Reinheimer, Arne, 87660, Irsee (DE); Wenzel, Antje, 86928, Hofstetten (DE); Gao, Fengge, Houghton Regis, LU 5 5 GZ (GB); Qingchun, Yuan, Leeds LS4 2TY (GB)
(74) Vertreter: Wildi, Roland

(56) Entgegenhaltungen:
- WO-A-20/04083291
- DATABASE WPI Section Ch, Week 199005 Derwent Publications Ltd., London, GB; Class A25, AN 1990-033413 XP002398842 & JP 01 311137 A (HUMAN IND CORP) 15. Dezember 1989 (1989-12-15)
- DATABASE WPI Section Ch, Week 198912 Derwent Publications Ltd., London, GB; Class A25, AN 1989-089997 XP002398843 & JP 01 040588 A (HITACHI CABLE LTD) 10. Februar 1989 (1989-02-10)
- DATABASE WPI Section Ch, Week 199047 Derwent Publications Ltd., London, GB; Class A25, AN 1990-351944 XP002398844 & JP 02 253936 A (NAGAMATSU M) 12. Oktober 1990 (1990-10-12)
- DATABASE WPI Section Ch, Week 199003 Derwent Publications Ltd., London, GB; Class A25, AN 1990-019557 XP002398845 & JP 01 299870 A (NAGAMATSU M) 4. Dezember 1989 (1989-12-04)
- ALEXANDRE M ET AL: "Polymer-layered silicate nanocomposites: preparation, properties and uses of a new class of materials" MATERIALS SCIENCE AND ENGINEERING R: REPORTS, ELSEVIER SEQUOIA S.A., LAUSANNE, CH, Bd. 28, Nr. 1-2, Juni 2000 (2000-06), Seiten 1-63, XP004205143 ISSN: 0927-796X

## Beschreibung

Die vorliegende Erfindung betrifft ein Polyurethan-Graphitoxid-Verbundmaterial, ein Verfahren zu seiner Herstellung sowie seine Verwendung als Flammschutz-Material und zur Brandschutzabdichtung von Durchbrüchen und/oder Durchführungen in Wänden, Böden und/oder Decken von Gebäuden. Das erfindungsgemäße Polyurethan-Graphitoxid-Verbundmaterial wird auch als Polyurethan-Graphitoxid-Nanocomposit bezeichnet, weil das Polyurethan zwischen den Kristallschichten des Graphitoxids vorliegt, wobei durch die Intercalation des Polyurethans zwischen die Schichten des Graphitoxids die Schichtabstände aufgeweitet werden und dann im Bereich von 0,7 bis 400 Nanometer betragen.

Es ist bekannt, daß Kunststoffe, und insbesondere Kunststoff-Formkörper, namentlich solche aus Kunststoffschaum, im Brandfall einer erheblichen Formveränderung unterliegen, weil sie schmelzen und sich dabei verformen, oder aber sich durch Temperatur- und Flammeinwirkung zersetzen und damit abgetragen werden. Dies ist besonders problematisch im Fall von Kunststoffen und Kunststoff-Formkörpern, die in Flammschutz-Zusammensetzungen oder als Brandschutzmittel zur Abschottung von Durchbrüchen, Durchführungen, Rohrdurchführungen, Kabeldurchführungen und sonstigen Öffnungen in Wänden, Böden und/oder Decken von Gebäuden eingesetzt werden.

Zur Erhöhung der Feuerwiderstandsdauer solcher Kunststoffe und Kunststoff-Formkörper werden üblicherweise Additive in das Kunststoffmaterial eingebracht, wie Flamminhibitoren, Flammschutzmittel, Ablationsfüllstoffe, verglasende und keramisierende Füllstoffe, verharzende, carbonatisierende und intumeszierende Systeme (additiver Flammschutz). Eine andere Möglichkeit besteht darin, bestimmte, die Feuerwiderstandsdauer erhöhende Komponenten direkt in das Polymer einzubauen, so daß diese Komponenten kovalent mit dem Kunststoffmaterial verknüpft werden (reaktiver Flammschutz).

Diese Zugabe beziehungsweise der Einbau von Additiven hat zur Folge, daß die während der Verbrennung des Kunststoffes beziehungsweise Kunststoff-Formkörpers entstehende carbonisierte Aschekruste als physikalische Barriere gegen die Hitzeübertragung, Permeabilität und Bildung von Pyrolysefragmenten und/oder Brennstoff in der Flammregion wirkt. Ganz allgemein hat sich gezeigt, daß eine hohe Kohlenstoffausbeute bei dem Verbrennen der Kunststoffe, beziehungsweise der Kunststoff-Formkörper, eine Hemmung der Entflammbarkeit der darin vorhandenen Polymere bewirkt. Zur Bewertung der Wirksamkeit eines Flammschutzes werden daher als wesentliche Parameter im allgemeinen die Menge und die Dicke der gebildeten Aschekruste beurteilt.

Für den passiven Brandschutz sind neben diesen quantitativen Wirkungen insbesondere auch die Gas- und Dampfpermeabilität, die Reaktivität und insbesondere die Stabilität der Aschekruste relevant.

Neben den oben angesprochenen Möglichkeiten des Einarbeitens oder der kovalenten Bindung von den gewünschten Effekt bewirkenden Additiven in den Kunststoff, wird in jüngster Zeit im Rahmen der Forschung und Entwicklung auf dem Flammschutzsektor die Möglichkeit des Einsatzes sogenannter Nanocomposite diskutiert, das heißt also von Verbundmaterialien, bei denen in einer polymeren Matrix Wirkstoffteilchen mit einer Teilchengröße im Nanometerbereich vorliegen.

Forschungsarbeiten zur Entwicklung polymerer Nanocomposite, die international insbesondere in den 90er Jahren - aufgrund der in Japan mit Polyamid-6 erzielten Ergebnisse - intensiviert wurden, verfolgen das Ziel, Eigenschaftsverbesserungen und Eigenschaftskombinationen zu erzeugen, die mit herkömmlichen Füllstoffen nicht zu erreichen sind, wie eine Steigerung der Festigkeit und der Steifigkeit der Materialien bei Erhalt der Zähigkeit und der optischen Transparenz der Polymermatrix. Beispielsweise werden Polyamid-6/Schichtsilikat-Nanocomposite durch ringöffnende Polymerisation von e-Caprolactam in Gegenwart von kationenausgetauschtem Montmorillonit hergestellt.

Bei diesem Verfahren wird ein Polyamid/Schichtsilikat-Nanocomposit hergestellt, mit entweder zufällig in der Polymermatrix verteilten Silikatschichten (delaminierte Struktur) oder mit gut orientierten Silikat-Multischichten, mit Schichtabständen zwischen den Silikatschichten von wenigen Nanometern (intercalierte Struktur). Das Polymer ist also zwischen die Silikatschichten eingelagert. Durch die dabei bewirkte deutliche Schichtaufweitung des Schichtsilikats wird seine effektive Oberfläche extrem vergrößert, so daß der Füllstoffgehalt der Polymermatrix drastisch verringert werden kann. Polymer/Schichtsilikat-Nanocomposite zeigen daher im Vergleich zu traditionell mit Füllstoffen versehenen Polymeren verbesserte mechanische Eigenschaften.

Die Herstellung, die Eigenschaften und die Anwendung von solchen Polymer/Schichtsilikat-Nanocompositen werden beispielsweise von M. Alexandre et al. (Materials Science and Engineering, 28 (2000), 1-63) beschrieben. Es handelt sich dabei um Nanocomposite auf der Grundlage von Schichtsilikaten, namentlich 2:1-Phyllosilikaten, wie Montmorillonit, Hectorit und Saponit. Als Polymere können thermoplastische, hitzehärtbare und elastomere Kunststoffmaterialien eingesetzt werden, namentlich Polymethylmethacrylat, Polyamide, Polystyrol, Polyethylenterephthalat, Epoxidharze, Kautschuk-Epoxidharz-Materialien sowie elastomere Polyurethane. Es wird beschrieben, daß durch die Wechselwirkung der Schichtsilikate mit den Polymeren verschiedene Typen von Verbundmaterialien gebildet werden können, nämlich solche, bei denen das Polymer nicht dazu in der Lage ist, zwischen die Silikatschichten einzudringen, so daß die Schichtsilikatteilchen in Form einer getrennten Phase in dem Verbundmaterial vorliegen. Wenn das Polymermaterial zwischen die Schichten des Schichtsilikats eindringt, ergibt sich eine intercalierte Struktur, bei der eine einzige oder in gewissen Fällen auch mehrere Polymerschichten zwischen den Silikatschichten vorliegen, die ihrerseits in Form einer gut geordneten mehrschichtigen Anordnung eingebettet sind, mit alternierenden Schichten aus dem Polymer und dem Schichtsilikat. Eine delaminierte oder exfoliierte Struktur liegt dann vor, wenn die Silikatschichten des Schichtsilikats vollständig getrennt sind und gleichmäßig in einer kontinuierlichen Polymermatrix dispergiert sind.

In dieser Veröffentlichung wird weiterhin ausgeführt, daß solche Polymer/Schichtsilikat-Nanocomposite verbesserte mechanische und thermische Eigenschaften aufweisen, indem sie nicht nur eine erhöhte thermische Stabilität besitzen, sondern auch durch die Ausbildung einer isolierenden und unbrennbaren Aschekruste günstige flammhemmende Wirkungen bei relativ niedrigem Füllstoffgehalt ergeben.

Andererseits ist es bekannt, daß man auch Polymere, wie Polystyrol, Polyvinylalkohol oder Polyvinylmethacrylat zwischen die Schichten von Graphit oder Graphitoxid einlagern kann und in dieser Weise Polymer/Graphit- beziehungsweise Graphitoxid-Nanocomposite erhält, welche eine signifikante Verringerung der Entflammbarkeit und verbesserte mechanische Eigenschaften zeigen (P. Xiao et al., Polymer 42 (2001), 4813-4816, F.M. Uhl et al., Polymer Degradation and Stability 76 (2002), 111-122, J. Xu et al., Polymer Degradation and Stability 73 (2001), 29-31; und G. G. Chen et al., Journal of Applied Polymer Science, Vol. 82 (2001), 2506-2513).

Ebenso wie im Fall der Polymer/Schichtsilikat-Nanocomposite werden diese Polymer-Graphit-Nanocomposite in der Weise hergestellt, daß man die zu polymerisierenden Monomeren als Intercalatverbindungen in das Schichtsilikat beziehungsweise den Graphit oder das Graphitoxid einbringt, unter Bildung einer Schichtsilikat-Graphit- beziehungsweise Graphitoxid-Intercalationsverbindung, und die in dieser Weise erhaltenen Intercalationsverbindungen in üblicher Weise den für die in situ-Polymerisation der Monomeren notwendigen Polymerisationsbedingungen unterwirft.

Im Brandfall kommt es bei solchen Polymer-Schichtsilikat-Nanocompositen bei der Verbrennung des Polymers an der Polymeroberfläche zur Ausbildung einer Barriereschicht aus Silikatschichten, welche die thermische Stabilität des verbleibenden Materials insgesamt signifikant erhöht.

Dieser Effekt beruht im wesentlichen darauf, daß sowohl der Wärmeeintrag als auch die für die Verbrennung erforderliche Sauerstoffzufuhr ebenso wie der Austritt thermischer Zersetzungsprodukte an der Oberfläche, die dort wiederum die Verbrennung unterstützen würden, durch einen labyrinthartigen Zugangsweg, der durch die in dem Material vorhandenen Silikatschichten verursacht wird, deutlich erschwert werden. Der Einsatz solcher Systeme für den Brandschutz bietet sich deshalb unter dem Gesichtspunkt verringerter Wärmefreisetzungs-Spitzenwerte an. Es hat sich jedoch gezeigt, daß eine V0-Klassifizierung beim Entflammbarkeitstest gemäß der Vorschrift UL 94 mit solchen Schichtsilikat-Polymer-Nanocompositen allein nicht erreichbar ist.

Wenngleich aus dem oben diskutierten Stand der Technik bekannt ist, daß sich mit Polymer/Schichtsilikat- beziehungsweise Polymer/Graphit-Nanocompositen eine Verbesserung der Flammschutzwirkung erzielen läßt, namentlich durch eine qualitative und quantitative Verbesserung der daraus im Brandfall gebildeten Aschekruste, haben sich solche Verbundmaterialien als nicht ausreichend wirksam erwiesen, um die angestrebten und notwendigen Flammschutz- beziehungsweise Brandschutzwirkungen zu erreichen. Namentlich variiert die Struktur natürlicher Schichtsilikate, welche für eine reproduzierbar gute Herstellung solcher Nanocomposite notwendig ist, je nach Schichtsilikattyp und Lagerstätte, beziehungsweise Lieferant, und erschwert eine qualitativ gleichbleibende Produktion von Flammschutz-Materialien mit dem angestrebten gleichmäßigen Brandschutzverhalten.

Die Aufgabe der vorliegenden Erfindung besteht somit darin, Polymer/Graphitoxid ggf modifizierten SchichtsilikatVerbundmaterialien der oben definierten Gattung bereitzustellen, welche im Brandfall zu sehr dichten, stabilen Aschekrustenstrukturen führen, die jenen der herkömmlichen Materialien deutlich überlegen sind.

Es hat sich überraschenderweise gezeigt, daß dies mit Hilfe von Polyurethan-Graphitoxid ggf modifizierten SchichtsilikatVerbundmaterialien möglich ist, welche Graphitoxid in expandierter Form in einer Polyurethanmatrix enthalten. Dies war in keiner Weise vorauszusehen, weil zu erwarten war, daß die in Graphitoxid vorliegenden Sauerstoffgruppen und reaktiven Zentren mit dem zur Bildung des Polyurethans notwendigen Polyisocyanat reagieren können, so daß angenommen werden mußte, daß sich durch eine unzureichende Vernetzung oder durch eine vorzeitige Reaktion der Reaktionspartner Probleme bei der gezielten Herstellung von Polyurethanen mit bestimmten gezielten Eigenschaften ergeben könnten. Obwohl Polyurethane aufgrund ihres Anwendungsspektrums von vorgefertigen Formteilen bis zur Bildung von Ortschaum als Produkte für den passiven Brandschutz besonders attraktiv sind, sind offenbar aufgrund der Chemie der Bildung der Polyurethane Produkte auf der Grundlage dieser Polymerklasse nicht bekannt geworden.

Die Erfindung betrifft daher das Polyurethan-Graphitoxid ggf modifizierten Schichtsilikat Verbundmaterial gemäß Hauptanspruch. Die Unteransprüche betreffen bevorzugte Ausführungsformen dieses Erfindungsgegenstandes sowie das Verfahren zur Herstellung dieses Verbundmaterials und seine Verwendung.

Gegenstand des Anspruchs 1 ist demzufolge ein Polyurethan-Graphitoxid-Verbundmaterial beziehungsweise Polyurethan-Graphitoxid-Nanocomposit, welches gekennzeichnet ist durch einen Gehalt an in expandierter Form in einer Polyurethanmatrix vorliegendem Graphitoxid. Die Polyurethanmatrix ist dabei ein übliches hartes, weiches oder elastomeres Polyurethan, welches geschäumt, ungeschäumt oder schäumbar sein kann.

Das Graphitoxid liegt in expandierter Form in dieser Polyurethanmatrix vor, das heißt in einer Form, bei der der Schichtabstand des Kristallgitters der Graphitoxidschichten gegenüber dem nativen Material erhöht ist dadurch, daß die Polyurethanmatrix auch zwischen diesen Graphitoxidschichten vorliegt. Vorzugsweise liegt somit das Graphitoxid als Nanocomposit in Form von zufällig in der Polyurethanmatrix verteilten Graphitoxidschichten (delaminierte Struktur) und/oder in Form von gut orientierten Graphitoxid-Multischichten, zwischen denen das Polyurethanmatrixmaterial intercaliert ist (intercalierte Struktur) in der Polyurethanmatrix vor. Bei der erfindungsgemäß bevorzugten Variante, bei der das Graphitoxid mit intercalierter Struktur in der Polyurethanmatrix vorliegt, weist das Graphitoxid einen Schichtabstand der Graphitoxidschichten von 0,7 nm bis 400 nm, vorzugsweise von 0,9 nm bis 200 nm auf. In diesem Zusammenhang ist festzuhalten, daß der Schichtabstand der Graphitschichten bei nativem Graphitoxid 0,3 nm beträgt. Bei dem erfindungsgemäß bevorzugt für die Herstellung des Polyurethan-Graphitoxid-Verbundmaterials eingesetzten Graphitoxid beträgt der Schichtabstand zwischen den einzelnen Graphitoxidschichten etwa 0,77 nm.

Gemäß einer bevorzugten Ausführungsform der Erfindung ist der Schichtabstand des Graphitoxids mit intercalierter beziehungsweise delaminierter Struktur um mindestens 100% größer als der Schichtabstand des Ausgangsgraphitoxids.

Die in dem Verbundmaterial vorliegenden Graphitoxidteilchen besitzen vorzugsweise eine mittlere Teilchengröße von 0,2 µm bis 150 µm, vorzugsweise von 2 µm bis 100 µm, wobei es sich gezeigt hat, daß bei der Synthese des erfindungsgemäß als Ausgangsmaterial eingesetzten Graphitoxids nach der Aufweitung des Schichtabstandes bei dem Oxidationsschritt und bei der Aufarbeitung, beim Waschen bis zu einem neutralen pH-Wert es zur Bildung von Agglomeraten kommt, die Teilchengrößen bis zu 150 µm erreichen können. Diese Agglomerate bestehen jedoch aus Graphitoxidpartikeln mit einer Teilchengröße in der Größenordnung von etwa 2 µm. Die bei der anschließenden Herstellung des erfindungsgemäßen Verbundmaterials eingesetzten Agglomerate unterliegen jedoch bei den Synthesebedingungen, namentlich bei der Behandlung im Ultraschallbad, einer mechanischen Einwirkung, so daß sie wieder in die kleineren Teilchen zerfallen können, wodurch sich der relativ große Teilchengrößenbereich ergibt.

Vorzugsweise enthält das erfindungsgemäße Polyurethan-Graphitoxid-Verbundmaterial 0,1 bis 30 Gew.-%, vorzugsweise 0,5 bis 10 Gew.-% des Graphitoxids, bezogen auf das Gesamtgewicht des Polyurethan-Graphitoxid-Verbundmaterials.

Das erfindungsgemäße Polyurethan-Graphitoxid-Verbundmaterial enthält zusätzlich ein Schichtsilikat, vorzugsweise ein 2:1-Phyllosilikat, insbesondere Montmorillonit, Hectorit und/oder Saponit, wobei dieses Schichtsilikat unmodifiziert oder modifiziert sein kann. Auch im Falle dieses Verbundmaterials liegt das Schichtsilikat vorzugsweise als Nanocomposit in Form von zufällig in der Polyurethanmatrix verteilten Silikatschichten (delaminierte Struktur) und/oder in Form von gut orientierten Silikat-Multischichten, zwischen denen das Polyurethanmatrixmaterial intercaliert ist (intercalierte Struktur) neben dem Graphitoxid in der Polyurethanmatrix vor. Dabei besitzt das Schichtsilikat mit intercalierter Struktur vorzugsweise einen Schichtabstand der Silikatschichten von 0,7 nm bis 400 nm, vorzugsweise von 0,9 nm bis 200 nm. Vorzugsweise ist der Schichtabstand des Schichtsilikats mit intercalierter beziehungsweise delaminierter Struktur um mindestens 100% größer als der des als Ausgangsmaterial eingesetzten Schichtsilikats.

Die in dem Verbundmaterial vorliegenden Schichtsilikatteilchen besitzen vorzugsweise eine mittlere Teilchengröße von 0,2 µm bis 150 µm, vorzugsweise von 2 µm bis 100 µm. Auch in diesem Fall können die Schichtsilikate in Form von Agglomeraten vorliegen, welche sich bei der Intercalationsbehandlung deagglomerieren können unter Bildung der die Agglomerate bildenden kleineren Einzelteilchen.

Das erfindungsgemäße Verbundmaterial enthält gemäß dieser bevorzugten Ausführungsform vorzugsweise 0,1 bis 30 Gew.-%, bevorzugter 0,5 bis 10 Gew.-% des Schichtsilikats, wobei die Gesamtmenge an Graphitoxid und Schichtsilikat in dem Verbundmaterial 0,1 bis 30 Gew.-%, vorzugsweise 0,5 bis 10 Gew.-%, bezogen auf das Gesamtgewicht des Polyurethan-Graphitoxid-Verbundmaterials, beträgt. Vorzugsweise liegen Graphitoxid und Schichtsilikat in einem Gewichtsverhältnis von 10:1 bis 1:10, vorzugsweise von 5:1 bis 1:5, vor.

Das erfindungsgemäße Polyurethan-Graphitoxid-Verbundmaterial ist vorzugsweise erhältlich durch in-situ-Polykondensation mindestens eines als Intercalatverbindung in dem Graphitoxid und gegebenenfalls in dem Schichtsilikat vorliegenden Polyols mit mindestens einem Polyisocyanat oder durch in-situ-Polykondensation mindestens eines als Intercalatverbindung in dem Graphitoxid und gegebenenfalls in dem Schichtsilikat vorliegenden Polyisocyanat mit mindestens einem Polyol.

Das erfindungsgemäße Polyurethan-Graphitoxid-Verbundmaterial kann in Form eines harten, weichen oder elastomeren, ungeschäumten, schäumbaren oder geschäumten Polyurethansystems vorliegen, beispielsweise als geschäumter Überzug, als gegebenenfalls schäumbare und gegebenenfalls härtbare Formmasse, als härtbares Formteil, als geschäumte Formmasse, als geschäumtes Formteil oder als Einkomponenten- oder Zweikomponenten-Ortschaumsystem vorliegen.

Ein weiterer Gegenstand der Erfindung betrifft ein Verfahren zur Herstellung des oben definierten Polyurethan-Graphitoxid-Verbundmaterials, welches dadurch gekennzeichnet ist, daß man mindestens ein Polyol in Graphitoxid und in das Schichtsilikat intercaliert und anschließend die erhaltene Graphitoxid-Intercalationsverbindung zusammen mit der Schichtsilikat-Intercalationsverbindung mit mindestens einem Polyisocyanat zu dem Polyurethan umsetzt oder mindestens ein Polyisocyanat in Graphitoxid und in das Schichtsilikat intercaliert und anschließend die Graphitoxid-Intercalationsverbindung, die Schichtsilikat-Intercalationsverbindung mit mindestens einem Polyol zu dem Polyurethan umsetzt. Bei diesem Verfahren verwendet man das Graphitoxid und das Schichtsilikat mit einer mittleren Teilchengröße von 0,2 µm bis 150 µm, vorzugsweise von 2 µm bis 100 µm.

Gemäß eine weiteren Ausführungsform kann man das Graphitoxid vor der Intercalation des mindestens einen Polyols einer Behandlung mit einem quartären Ammoniumsalz und/oder einem kationischen Tensid, vorzugsweise mit Cetyltriethylammoniumbromid, unterwerfen, um die Polarität des Graphitoxids zu modifizieren, beziehungsweise um die Schichtabstände zwischen den Graphitoxidschichten beziehungsweise den Silikatschichten zu vergrößern.

Das erfindungsgemäße eingesetzte Graphitoxid ist dem Fachmann an sich gut bekannt. Seine Herstellung erfolgt durch Oxidation von Graphit mit Kaliumchlorat in einem Schwefelsäure-Salpetersäure-Gemisch, wie es beispielsweise in Römpp, Lexikon Chemie, 10. Auflage, Band 2 (1997), Seite 1602 angegeben ist. Vorzugsweise bereitet man Graphitoxid durch Umsetzen von Graphit mit einem Oxidationsmittel, beispielsweise Kaliumpermanganat, unter Anwendung von an sich bekannten Verfahrensweisen. Vor der Intercalation des mindestens einen Polyols oder Polyurethans wäscht man das Graphitoxid vorzugsweise mit destilliertem Wasser bis zu einem pH-Wert von 6 bis 8, vorzugsweise bis zu einem neutralen pH-Wert von beispielsweise 7.

Für die Herstellung der Polyurethanmatrix verwendet man übliche Polyole, Polyisocyanate und Katalysatoren für die Polyurethanbildungsreaktion. Beispielsweise kann man ein Polyetherpolyol und/oder ein Polyesterpolyol mit einer OH-Zahl von 30 bis 1000, vorzugsweise 500 bis 1000, und einer durchschnittlichen OH-Funktionalität pro Molekül von 2 bis 7, vorzugsweise 2 bis 4, einsetzen oder aber auch Aminopolyetherpolyole und/oder Polyole auf der Grundlage von Phosphorsäureester mit OH-Zahlen von 30 bis 1000, vorzugsweise 100 bis 300 bei einer durchschnittlichen OH-Funktionalität pro Molekül von 2 bis 7, vorzugsweise 3 bis 5.

Als Polyisocyanate verwendet man vorzugsweise Polyisocyanate mit einem NCO-Gehalt von 5 bis 55%, vorzugsweise 20 bis 50%, und einer durchschnittlichen Anzahl von 2 bis 5, vorzugsweise 2 bis 4 NCO-Gruppen pro Molekül. Besonders bevorzugte Polyisocyanate sind solche auf der Grundlage von Methylendiphenyldiisocyanat und/oder polymere Homologe davon. Im Fall der Erzeugung eines Polyurethanschaums setzt man vorzugsweise Wasser in einer Menge, die einen Polyurethanschaum mit der gewünschten Schaumdichte ergibt, zu, oder aber auch physikalische Treibmittel. Als Katalysatoren für die Reaktion des Polyols mit dem Polyisocyanat verwendet man vorzugsweise eine Mischung aus Katalysatoren, welche die Polyurethanbildungsreaktion unter Bildung von Polyisocyanurat-Gruppen begünstigen (Trimerisierungskatalysator) und gegebenenfalls von Polyurethangruppen und/oder Polyharnstoffgruppen. Solche Katalysatoren, welche die Bildung der Polyurethangruppen, Polyharnstoffgruppen und Polyisocyanuratgruppen begünstigen, sind dem Fachmann an sich bekannt. Es handelt sich vorzugsweise um Metallsalze von organischen und/oder anorganischen Säuren, wie Dialkalimetallsalze oder Edelalkalimetallsalze von Carbonsäuren, wie Natriumacetat, Kaliumacetat, Kaliumadipat, Natriumbenzoat, Kaliumoctoat oder auch Zinnsalze, wie Zinnoctoat oder Bleioctoat, oder aber aliphatische und aromatische Amine, vorzugsweise tertiäre Amine, wie 2,4,6-Tris(dimethylaminomethyl)-phenol, Triethylamin, N-Ethylmorpholin, N-Methylmorpholin, Tetramethyliminobispropylamin und dergleichen. Die Reaktionsmischung kann weiterhin Flammschutzmittel und intumeszierende Materialien, die ihr Volumen beim Erhitzen vergrößern, sowie Füllstoffe, Schaumstabilisatoren, Farbstoffe und weitere, an sich bekannte Hilfsstoffe enthalten. Bezüglich der Art und der Menge der eingesetzten Materialien zur Bildung der Polyurethanmatrix darf auf die Offenbarung der DE 198 60 339 C2 verwiesen werden.

Ein weiterer Gegenstand der Erfindung ist die Verwendung des beschriebenen Polyurethan-Graphitoxid-Verbundmaterials als Flammschutz-Material und zur Brandschutzabdichtung von Durchbrüchen und/oder Durchführungen in Wänden, Böden und/oder Decken von Gebäuden. Hierzu kann man das Polyurethan-Graphitoxid-Verbundmaterial entweder zuvor herstellen und durch entsprechende Bearbeitung in die gewünschte Form bringen, oder man kann das Material vor Ort, vorzugsweise als Ortschaum, innerhalb der abzudichtenden Öffnungen aufschäumen. Hierbei liegt die Polyolkomponente beziehungsweise die Polyisocyanatkomponente in getrennten Behältern vor, beispielsweise Zweikomponenten-Behältern, aus denen die Materialien, welche die erforderliche Viskosität aufweisen, unter Einwirkung mechanischer Kräfte oder durch Einsatz eines Treibmittels durch eine Mischdüse in die abzudichtende Öffnung ausgepresst werden, wo sie dann aufschäumen und unter Bildung eines erfindungsgemäßen Polyurethanschaum-Graphitoxid-Verbundmaterials reagieren.

Es hat sich aber überraschenderweise gezeigt, daß bei Verwendung von Graphitoxid als Ausgangsmaterial bei der in situ-Polykondensation von in dem Graphitoxid als Intercalatverbindung enthaltenen Polyol, beziehungsweise Polyisocyanat, Polyurethan-Graphitoxid-Verbundmaterialien beziehungsweise - Nanocomposite erhalten werden können, welche sich durch überraschend gute Brandschutzeigenschaften auszeichnen, namentlich indem sie eine Aschekruste bilden, die eine erheblich größere mechanische und thermische Stabilität besitzt als Aschekrusten, die man mit den herkömmlichen Polymer/Schichtsilikat-Nanocompositen beziehungsweise Polymer/Graphitoxid-Nanocompositen erhält.

Die folgenden Beispiele dienen der weiteren Erläuterung der Erfindung.

### BEISPIEL 1

### Herstellung von Graphitoxid

Man beschickt einen mit einem Rührer ausgerüsteten und in einem Eisbad vorliegenden Rundkolben mit 10 g Graphitpulver und 230 ml konzentrierter Schwefelsäure. Unter intensivem Rühren gibt man portionsweise 30 g Kaliumpermanganat zu, wobei die Reaktionstemperatur 10°C nicht übersteigen darf. Anschließend rührt man das Reaktionsgemisch während 30 Minuten bei 35°C. Dann gibt man 460 ml Wasser destilliertes Wasser zu, was zu einem Temperaturanstieg auf etwa 98°C führt, welche Temperatur während weiterer 15 Minuten beibehalten wird. Dann wird überschüssiges Kaliumpermanganat durch Zugabe von 250 ml destilliertem Wasser und 100 ml 30%-iger Wasserstoffperoxid-Lösung zerstört. Das in dieser Weise erhaltene Produkt wird abfiltriert, mit 5%-iger Chlorwasserstoffsäure sulfatfrei gewaschen, mit destilliertem Wasser neutralisiert und anschließend im Vakuum bei 50°C getrocknet unter Erhalt des gewünschten Graphitoxidpulvers (mit einem Maximum der Teilchengrößenverteilung bei < 2 µm).

### BEISPIEL 2 (Vergleichsbeispiel)

### Herstellung eines Polyurethanschaum-Graphitoxid-Verbundmaterials (Nanocomposit)

Man vermischt 0,15 g des in Beispiel 1 erhaltenen Graphitoxids mit 0,15 g Wasser, 5 g Polyethylenglykol (Molekulargewicht 300) und 5 mg 1,4-Diaza-bicyclo[2.2.2]octan und behandelt die Mischung während 30 Minuten im Ultraschallbad. Durch diese Behandlung wird das Polyethylenglykol unter Expansion beziehungsweise Aufweitung der Gitterschichten in das Graphitoxid intercaliert, das heißt zwischen die Gitterschichten eingelagert. Anschließend setzt man das Reaktionsgemisch mit 4,67 g Toluoldiisocyanat (TDI) zu einem Polyurethanschaum-Graphitoxid-Verbundmaterial um. Die Durometer-Härte des erhaltenen Polyurethanschaum-Graphitoxid-Verbundmaterials beträgt 88.

Zum Vergleich beträgt die Durometer-Härte eines in gleicher Weise ohne die Verwendung von Graphitoxid hergestellten Polyurethanschaums lediglich 72.

Die Durometer-Härte eines in gleicher Weise hergestellten Polyurethanschaums, der jedoch kein Graphitoxid in expandierter Form, sondern lediglich in zugemischter Form enthält, beträgt lediglich 68. Die Herstellung dieses Vergleichsmaterials erfolgt in der oben beschriebenen Weise, wobei jedoch anstelle des Graphitoxids Graphit eingesetzt wird, wodurch jedoch wegen des zu geringen Schichtabstands und der Polarität des Graphits keine Intercalation des Polyols zwischen die Graphitschichten erfolgen kann und damit kein Nanocomposit gebildet wird.

Die angegebene Durometer-Härte ist ein Standardmaß der Härte von vulkanisiertem Kautschuk, Kunststoffen und anderen Nichtmetallen. Die Durometer-Härte wird gemäß der ASTM-Norm D2240 bestimmt. Im vorliegenden Fall wird die Durometer-Härte bestimmt unter Verwendung eines handelsüblichen Durometers (Rex Durometer, Modell 1600, für Typ 00 Shore-Härte-Messungen). Das Durometer verfügt über einen federbelasteten, halbkugelförmigen Eindruckstempel (Durchmesser 2,4 mm, Länge 2,7 mm), mit dem die Durometer-Härte anhand des Grades der Eindringtiefe des Eindruckstempels in die zu untersuchende Probe ermittelt wird.

Die dimensionslose Einheit der Durometer-Härte variiert zwischen 0 und 100, wobei die Ziffer 100 bedeutet, daß die Eindringtiefe des Eindruckstempels in die Probe 0 ist.

Die in der obigen Weise erhaltenen Verbundmaterialien wurden im Hinblick auf die Stabilität der beim Verbrennen gebildeten Aschekruste untersucht. Hierzu wurden makroskopische Prüfkörper mit den Abmessungen von ca. 2 x 2 x 6 cm während 1 Minute einseitig mit Hilfe eines Bunsenbrenners beflammt, um sicherzustellen, daß die Asche nicht weggebrannt wird. Die Messung der Durometer-Härte erfolgte in der oben angegebenen Weise. Die ermittelten Durometer-Härten der Ausgangs-Verbundmaterialien und der beim Verbrennen erzeugten Aschekrusten sind in der folgenden Tabelle 1 zusammengestellt.

| **Tabelle 1** | | |
|---|---|---|
| **Material** | **Durometer-Härte (Ausgangsmaterial)** | **Durometer-Härte (Aschekruste)** |
| Polyurethanschaum, unmodifiziert (Vergleich) | 72 | 0 |
| Polyurethanschaum, einfache Graphitzumischung (Vergleich) | 68 | 0 |
| Polyurethanschaum-Graphitoxid-Verbundmaterial (Nanocomposit) | 88 | 42 |

Aus der obigen Tabelle 1 ist ohne weiteres zu erkennen, daß das Nanocomposit-Verbundmaterial bei geringfügig höherer Durometer-Härte des Ausgangsmaterials eine überraschend stabile Aschekruste mit einer Durometer-Härte von 42 ergibt, während die Aschenkrusten der Vergleichsmaterialien eine Durometer-Härte von 0 aufweisen und damit keinerlei für den Brandschutz erforderliche Festigkeit besitzen.

### BEISPIEL 3 (erfindungsgemäss)

Herstellung eines Polyurethanschaum-Graphitoxid + Schichtsilikat-Verbundmaterials (Nanocomposit)

Man vermischt 0,075 g des in Beispiel 1 hergestellten Graphitoxids, 0,075 g Natrium-montmorillonit, 0,15 g Wasser, 5 g Polyethylenglykol (Molekulargewicht 300) und 5 mg 1,4-Diazabicyclo[2.2.2]octan und behandelt die Mischung anschließend während 30 Minuten in einem Ultraschallbad. Durch diese Behandlung wird das Polyethylenglykol unter Expansion beziehungsweise Aufweitung der Gitterschichten des Graphitoxids und des Natrium-Montmorillonits intercaliert, das hießt zwischen diese Schichten eingelagert. Dann bewirkt man die Polykondensationsreaktion durch Umsetzung des erhaltenen Materials mit 4,67 g Toluoldiisocyanat (TDI) unter Bildung des gewünschten Polyurethanschaum-Graphitoxid + Montmorillonit-Verbundmaterials (Nanocomposit).

Die thermogravimetrische Untersuchung des in dieser Weise erhaltenen Polyurethan-Verbundmaterials mit Graphitoxid und Montmorillonit (1:1) ergibt bei 900°C eine Ascherückstand von 17,3 Gew.-% des Ausgangsmaterials.

Ein in gleicher Weise hergestelltes Polyurethan-Nanocomposite, welches lediglich Montmorillonit in einer Gesamtmenge von 0,15 g enthält, zeigt bei dieser thermogravimetrischen Analyse einen Ascherückstand bei 900°C von lediglich 12,7 Gew.-%.

In der nachfolgenden Tabelle 2 sind die in der in Beispiel 2 beschriebenen Weise bestimmten Durometer-Härtewerte aufgeführt:

| **Tabelle 2** | | |
|---|---|---|
| **Material** | **Durometer-Härte (Ausgangsmaterial)** | **Durometer-Härte (Aschekruste)** |
| Polyurethanschaum-Montmorillonit-Verbundmaterial (Vergleich) | 88 | 41 |
| Polyurethanschaum, Graphitoxid-Montmorillonit-Verbundmaterial (Nanocomposit) (Erfindung) | 88 | 42 |

Bei einer thermogravimetrischen Untersuchung wird der Gewichtsverlust der Probe als Funktion der Temperatur oder die Zeit bestimmt. Hierzu wird die Probe in einen Korundtiegel eingebracht und auf der Waage eines Thermogravimetrie-Gerätes positioniert. Diese Waage befindet sich in einem in der Vorrichtung integrierten Ofen, welcher einem dynamischen oder isothermen Temperatursteuerungsprogramm unterworfen werden kann. Im vorliegenden Fall wurde ein dynamischer Modus angewandt mit einer Aufheizrate von 10°C pro Minute über einen Temperaturbereich von 25°C bis 1100°C. Als Analysengas wurde synthetische Luft mit einer Flußrate von 50 ml pro Minute verwendet. In den als Probengefäß verwendeten Korundtiegel mit einem Fassungsvermögen von 150 µl wurde eine Einwaage des zu untersuchenden Materials von etwa 10 bis 30 mg eingebracht.

Die Rückstände der dieser thermogravimetrischen Analyse unterworfenen Produkte der Beispiele 2 und 3 sind in der folgenden Tabelle 3 zusammengestellt.

| **Tabelle 3** | |
|---|---|
| **System** | **Rückstand bei der thermogravimetrisehen Analyse bei 900°C [Gew. %]** |
| Polyurethanschaum, unmodifiziert (Vergleich) | 0 |
| Polyurethanschaum, einfache Graphitzumischung (Vergleich) | 0 |
| Polyurethanschaum-GraphitVerbundmaterial von Beispiel 2 | 0 |
| Polyurethanschaum-Montmorillonit-Verbundmaterial (Vergleich) | 12.7 |
| Polyurethanschaum-Graphitoxid-Montmorillonit-Verbundmaterial von Beispiel 3 (Erfindung) | 17.3 |

Aus der obigen Tabelle 3 ist zu erkennen, daß die Polyurethan-Schäume, die Graphit oder Graphitoxid enthalten, bei der thermogravimetrischen Analyse bei 900°C keinen Rückstand mehr ergeben, da das brennbare Material vollständig weggebrannt ist. Wenn das Polyurethanschaum-Verbundmaterial ein Schichtsilikat, nämlich Montmorillonit, enthält, ergibt sich eine deutliche Verbesserung des Rückstandes der thermogravimetrischen Analyse. Überraschenderweise ergibt sich durch die erfindungsgemäße Kombination von Graphitoxid und Montmorillonit in dem Polyurethanschaum-Verbundmaterial eine synergistische Verbesserung des Ascherückstandes bei der thermogravimetrischen Analyse, so daß dieses Material des Beispiels 3 für den angestrebten Anwendungszweck als Flammschutz-Material und zur Brandschutzabdichtung überraschend gut geeignet ist.

Aus den obigen Tabellen 1 bis 3 läßt sich ablesen, daß mit den erfindungsgemäßen Polyurethan-Graphitoxid-Verbundmaterialien Produkte erhalten werden, welche bei der Beflammung eine Aschekruste mit ausgezeichneten Eigenschaften aufweisen, wobei die neben dem Graphitoxid noch Montmorillonit, also ein Schichtsilikat, enthaltenden erfindungsgemäßen Verbundmaterialien eine synergistische Verbesserung des Ascherückstandes bei der thermogravimetrischen Analyse zeigen.

Die obigen Beispiele und Vergleichsbeispiele verdeutlichen, daß im Gegensatz zu reinen Polyurethanschäumen, die beim Verbrennen keine Aschekruste bilden, sondern lediglich schmelzen und verbrennen, die erfindungsgemäßen Polyurethan-Graphitoxid-Verbundmaterialien eine relativ stabile Aschekruste mit ausreichender Härte bilden und damit für Brandschutzanwendungen hervorragend geeignet sind. Nach einer bevorzugten Ausführungsform werden diese reinen Polyurethanschaum-Graphitoxid-Verbundmaterialien durch das Einbringen von Schichtsilikaten, bei denen die Polyurethanmatrix ebenso zwischen die Schichten des Schichtsilikates wie zwischen die Schichten des Graphitoxids eingelagert sind, eine synergistische Verbesserung der Flammbeständigkeit der gebildeten Aschekruste ergeben.

## Patentansprüche

1. Polyurethan-Graphitoxid-Verbundmaterial, **gekennzeichnet durch** einen Gehalt an in expandierter Form in einer Polyurethanmatrix vorliegendem Graphitoxid und an gegebenenfalls modifiziertem Schichtsilikat.

2. Polyurethan-Graphitoxid-Verbundmaterial nach Anspruch 1, **dadurch gekennzeichnet, daß** das Graphitoxid und das Schichtsilikat als Nanocomposit in Form von zufällig in der Polyurethanmatrix verteilten Graphitoxidschichten (delaminierte Struktur) und/oder in Form von gut orientierten Graphitoxid-Multischichten, zwischen denen das Polyurethanmatrixmaterial intercaliert ist (intercalierte Struktur), in der Polyurethanmatrix vorliegen.

3. Polyurethan-Graphitoxid-Verbundmaterial nach Anspruch 2, **dadurch gekennzeichnet, daß** das Graphitoxid und das Schichtsilikat mit intercalierter Struktur mit einem Schichtabstand der Graphitoxidschichten und der Silikatschichten von 0,7 nm bis 400 nm, vorzugsweise von 0,9 nm bis 200 nm in der Polyurethanmatrix vorliegen.

4. Polyurethan-Graphitoxid-Verbundmaterial nach den Ansprüchen 2 oder 3, **dadurch gekennzeichnet, daß** der Schichtabstand des Graphitoxids und des Schichtsilikats mit intercalierter bzw. delaminierter Struktur um mindestens 100% größer ist als der des Ausgangsgraphitoxids bzw. des Ausgangsschichtsilikats.

5. Polyurethan-Graphitoxid-Verbundmaterial nach mindestens einem der vorhergehenden Ansprüche, **dadurch gekennzeichnet, daß** die in dem Verbundmaterial vorliegenden Graphitoxidteilchen und Schichtsilikatteilchen eine mittlere Teilchengröße von 0,2 µm bis 150 µm, vorzugsweise von 2 µm bis 100 µm aufweisen.

6. Polyurethan-Graphitoxid-Verbundmaterial nach mindestens einem der vorhergehenden Ansprüche, **dadurch gekennzeichnet, daß** es 0,1 bis 30 Gew.-%, vorzugsweise 0,5 bis 10 Gew.-% des Graphitoxids und 0,1 bis 30 Gew.-%, vorzugsweise 0,5 bis 10 Gew.-% des Schichtsilikats enthält, wobei die Gesamtmenge an Graphitoxid und Schichtsilikat in dem Verbundmaterial 0,1 bis 30 Gew.-%, vorzugsweise 0,5 bis 10 Gew.-%, bezogen auf das Gesamtgewicht des Polyurethan-Graphitoxid-Verbundmaterials, beträgt.

7. Polyurethan-Graphitoxid-Verbundmaterial nach mindestens einem der vorhergehenden Ansprüche, **dadurch gekennzeichnet, daß** es als Schichtsilikat ein 2:1-Phyllosilikat, vorzugsweise Montmorillonit, Hectorit und/oder Saponit enthält.

8. Polyurethan-Graphitoxid-Verbundmaterial nach mindestens einem der vorangehenden Ansprüche, **dadurch gekennzeichnet, daß** es Graphitoxid und Schichtsilikat in einem Gewichtsverhältnis von 10:1 bis 1: 10, vorzugsweise von 5:1 bis 1:5 enthält.

9. Polyurethan-Graphitoxid-Verbundmaterial nach mindestens einem der vorangehenden Ansprüche, **dadurch gekennzeichnet, daß** es erhältlich ist durch in-situ-Polykondensation mindestens eines als Intercalatverbindung in Graphitoxid und in dem Schichtsilikat vorliegenden Polyols mit mindestens einem Polyisocyanat oder mindestens eines als Intercalatverbindung in Graphitoxid und in dem Schichtsilikat vorliegenden Polyisocyanats mit mindestens einem Polyol.

10. Polyurethan-Graphitoxid-Verbundmaterial nach mindestens einem der vorhergehenden Ansprüche, **dadurch gekennzeichnet, daß** es in Form eines harten, weichen oder elastomeren, ungeschäumten, schäumbaren oder geschäumten Polyurethan-Systems vorliegt.

11. Polyurethan-Graphitoxid-Verbundmaterial nach Anspruch 10, **dadurch gekennzeichnet, daß** das Polyurethan-System als gegebenenfalls geschäumter Überzug, als gegebenenfalls schäumbare und gegebenenfalls härtbare Formmasse, als härtbares Formteil, als geschäumte Formmasse, als geschäumtes Formteil oder als Einkomponenten- oder Zweikomponenten-Ortschaumsystem vorliegt.

12. Verfahren zur Herstellung des Polyurethan-Graphitoxid-Verbundmaterials nach mindestens einem der vorhergehenden Ansprüche, **dadurch gekennzeichnet, daß** man mindestens ein Polyol in Graphitoxid und in das Schichtsilikat intercaliert und anschließend die erhaltene Graphitoxid-Intercalationsverbindung und die Schichtsilikat-Intercalationsverbindung mit mindestens einem Polyisocyanat zu dem Polyurethan umsetzt **oder** mindestens ein Polyisocyanat in Graphitoxid, und in das Schichtsilikat intercaliert und anschließend die Graphitoxid-Intercalationsverbindung und die Schichtsilikat-Intercalationsverbindung mit mindestens einem Polyol zu dem Polyurethan umsetzt.

13. Verfahren nach Anspruch 12, **dadurch gekennzeichnet, daß** das Graphitoxid und das Schichtsilikat eine mittlere Teilchengröße von von 0,2 µm bis 150 µm, vorzugsweise von 2 µm bis 100 µm aufweisen.

14. Verfahren nach Anspruch 12 oder 13, **dadurch gekennzeichnet, daß** man das Graphitoxid vor der Intercalation des mindestens einen Polyols einer Behandlung mit einem quartären Ammoniumsalz und/oder einem kationischen Tensid, vorzugsweise Cetyltriethylammoniumbromid zur Modifizierung der Polarität des Graphitoxids unterwirft.

15. Verfahren nach den Ansprüchen 12 bis 14, **dadurch gekennzeichnet, daß** man das Graphitoxid vor der Intercalation des mindestens einen Polyols mit destilliertem Wasser bis zu einem pH-Wert von 6 bis 8, vorzugsweise 7 wäscht.

16. Verfahren nach mindestens einem der Ansprüche 12 bis 15, **dadurch gekennzeichnet, daß** man die Polyurethanbildungsreaktion in Gegenwart eines oder mehrerer Katalysatoren für die Reaktion des Polyols mit dem Polyisocyanat, und gegebenenfalls mindestens eines chemischen oder physikalischen Treibmittels, eines anorganischen Brandschutzadditivs, eines organischen Flammschutzmittels, sowie üblichen Füllstoffen, Hilfsstoffen und/oder Additiven in üblichen Mengen bewirkt.

17. Verwendung des Polyurethan-Graphitoxid-Verbundmaterials nach den Ansprüchen 1 bis 11 als Flammschutz-Material und zur Brandschutzabdichtung von Durchbrüchen und/oder Durchführungen in Wänden, Böden und/oder Decken von Gebäuden.

## Claims

1. Polyurethane-graphite oxide composite material **characterised by** a content of graphite oxide present in expanded form in a polyurethane foam matrix and if necessary modified phyllosilicate.

2. Polyurethane-graphite oxide composite material in accordance with Claim 1, **characterised in that** graphite oxide and the phyllosilicate are present as a nanocomposite in the form of graphite oxide layers randomly distributed in the polyurethane matrix (delaminated structure) and/or in the form of well orientated graphite oxide multiple layers, between which the polyurethane matrix material is intercalated (intercalated structure) in the polyurethane matrix.

3. Polyurethane-graphite oxide composite material in accordance with Claim 2, **characterised in that** the graphite oxide and the phyllosilicate with the intercalated structure are present in the polyurethane matrix with a layer spacing for the graphite oxide layers and the silicate layers of 0.7 nm to 400 nm, and preferably from 0.9 nm to 200 nm.

4. Polyurethane-graphite oxide composite material in accordance with Claims 2 or 3, **characterised in that** the layer spacing of the graphite oxide and the phyllosilicate with the intercalated or delaminated structure is at least 100% greater than that of the original graphite oxide or the original phyllosilicate respectively.

5. Polyurethane-graphite oxide composite material in accordance with at least one of the preceding claims, **characterised in that** the graphite particles and phyllosilicate particles present in the composite material have an average particle size of 0.2 µm to 150 µm, and preferably from 2 µm to 100 µm.

6. Polyurethane-graphite oxide composite material in accordance with at least one of the preceding claims, **characterised in that** it contains 0.1 to 30% by weight and preferably 0.5 to 10% by weight of graphite oxide and 0.1 to 30% by weight and preferably 0.5 to 10% by weight of phyllosilicate, in which the total quantity of graphite oxide and phyllosilicate in the composite material, with reference to the overall weight of the polyurethane-graphite oxide composite material, is 0.1 to 30% by weight and preferably 0.5 to 10% by weight.

7. Polyurethane-graphite oxide composite material in accordance with at least one of the preceding claims, **characterised in that** it contains a 2:1-phyllosilicate, preferably montmorillonite, hectorite and/or saponite as the phyllosilicate.

8. Polyurethane-graphite oxide composite material in accordance with at least one of the preceding claims, **characterised in that** it contains graphite oxide and phyllosilicate in a weight ratio on 10:1 to 1:10, preferably 5:1 to 1:5.

9. Polyurethane-graphite oxide composite material in accordance with at least one of the preceding claims, **characterised in that** it can be obtained by in-situ polycondensation of at least one polyol present in the graphite oxide and in the phyllosilicate as an intercalated compound with at least one polyisocynate or at least one polyisocynate present in the graphite oxide and in the phyllosilicate as an intercalated compound with at least one polyol.

10. Polyurethane-graphite oxide composite material in accordance with at least one of the preceding claims, **characterised in that** it is present in the form of a hard, soft or elastomeric, unexpanded, expandable or expanded polyurethane system.

11. Polyurethane-graphite oxide composite material in accordance with Claim 10, **characterised in that** the polyurethane system is present if required as an expanded coating, if required as an expandable and if necessary thermosetting moulding material, as a thermosetting moulded part, as an expanded moulding material, as an expanded moulded part or as a single component or twin component local foam system.

12. Process for manufacturing the polyurethane-graphite oxide composite material in accordance with at least one of the preceding claims, **characterised in that** at least one polyol is intercalated in the graphite oxide and in the phyllosilicate and the graphite oxide intercalation compound and the phyllosilicate intercalation compound is then converted to polyurethane with at least one polyisocyanate or at least one polyisocyanate is intercalated in graphite oxide and in the phyllosilicate and the graphite oxide intercalation compound and the phyllosilicate intercalation compound is then converted into polyurethane with at least one polyol.

13. Process in accordance with Claim 12, **characterised in that** the graphite oxide and the phyllosilicate have an average particle size of 0.2 µm to 150 µm, preferably from 2 µm to 100 µm.

14. Process in accordance with Claim 12 or 13, **characterised in that,** prior to the intercalation of at least one polyol, the graphite oxide is subjected to treatment with a quaternary ammonium salt and/or a cationic surfactant, preferably with cetrimonium bromide in order to modify the polarity of the graphite oxide.

15. Process in accordance with Claims 12 to 14, **characterised in that**, prior to the intercalation of at least one polyol, the graphite oxide is washed with distilled water for a pH value of 6 to 8, and preferably 7.

16. Process in accordance with at least one of Claims 12 to 15, **characterised in that** the polyurethane formation is effected in the presence of one or more catalysts for the reaction of the polyol with the polyisocyanate and if required at least one chemical or physical propellant, an inorganic fireproofing additive and an organic flame retardant, as well as the usual fillers, auxiliary materials and/or additives in the usual quantities.

17. Use of the polyurethane-graphite oxide composite material in accordance with Claims 1 to 11 as a flame-proofing material and for the fireproofing of apertures and ducts in building walls, floors and/or ceilings.

## Revendications

1. Matériau composite de polyuréthanne-oxyde de graphite, **caractérisé par** une teneur en oxyde de graphite présent dans la matrice de polyuréthanne sous forme expansée, et en phyllosilicate le cas échéant modifié.

2. Matériau composite de polyuréthanne-oxyde de graphite selon la revendication 1, **caractérisé en ce que** l'oxyde de graphite et le phyllosilicate sont présents dans la matrice de polyuréthanne, en tant que nanocomposite sous forme de couches d'oxydes de graphite (structure délaminée) divisées de manière fortuite dans la matrice de polyuréthanne et/ou sous forme de multicouches d'oxyde de graphite bien orientées, entre lesquelles le matériau de la matrice de polyuréthanne est intercalé (structure intercalée).

3. Matériau composite de polyuréthanne-oxyde de graphite selon la revendication 2, **caractérisé en ce que** l'oxyde de graphite et le phyllosilicate sont présents dans la matrice de polyuréthanne, selon une structure intercalée avec une distance entre les couches d'oxyde de graphique et les couches de silicate allant de 0,7 nm à 400 nm, de préférence de 0,9 nm à 200 nm.

4. Matériau composite de polyuréthanne-oxyde de graphite selon la revendication 2 ou 3, **caractérisé en ce que** la distance entre les couches d'oxyde de graphite et de phyllosilicate selon la structure intercalée et respectivement, délaminée, est supérieure d'au moins 100% par rapport à l'oxyde de graphite de départ et respectivement, le phyllosilicate de départ.

5. Matériau composite de polyuréthanne-oxyde de graphite selon au moins l'une des revendications précédentes**, caractérisé en ce que** les particules d'oxyde de graphite et les particules de phyllosilicate présentes dans le matériau composite présentent une taille moyenne des particules allant de 0,2 µm à 150 µm, de préférence de 2 µm à 100 µm.

6. Matériau composite de polyuréthanne-oxyde de graphite selon au moins l'une des revendications précédentes, **caractérisé en ce qu'**il contient 0,1 à 30% en poids, de préférence 0,5 à 10% en poids d'oxyde de graphite et 0,1 à 30% en poids, de préférence 0,5 à 10% en poids de phyllosilicate, où la quantité totale d'oxyde de graphite et de phyllosilicate se situe dans le matériau composite, dans l'intervalle allant de 0,1 à 30% en poids, de préférence de 0,5 à 10% en poids, sur base du poids total du matériau composite de polyuréthanne-oxyde de graphite.

7. Matériau composite de polyuréthanne-oxyde de graphite selon au moins l'une des revendications précédentes, **caractérisé en ce qu'**il contient comme phyllosilicate, un phyllosilicate 2:1, de préférence la montmorillonite, l'hectorite et/ou la saponite.

8. Matériau composite de polyuréthanne-oxyde de graphite selon au moins l'une des revendications précédentes, **caractérisé en ce qu'**il contient l'oxyde de graphite et le phyllosilicate en un rapport pondéral allant de 10:1 à 1:10, de préférence de 5:1 à 1:5.

9. Matériau composite de polyuréthanne-oxyde de graphite selon au moins l'une des revendications précédentes, **caractérisé en ce qu'**il est obtenu par polycondensation in situ d'au moins un polyol présent comme composé d'intercalation dans l'oxyde de graphite et dans le phyllosilicate, avec au moins un polyisocyanate ou d'au moins un polyisocyanate présent comme composé d'intercalation dans l'oxyde de graphite et dans le phyllosilicate, avec au moins un polyol.

10. Matériau composite de polyuréthanne-oxyde de graphite selon au moins l'une des revendications précédentes, **caractérisé en ce qu'**il se présente sous forme d'un système de polyuréthanne dur, souple ou élastomère, non moussé, moussable ou moussé.

11. Matériau composite de polyuréthanne-oxyde de graphite selon la revendication 10, **caractérisé en ce que** le système de polyuréthanne se présente comme un revêtement le cas échéant moussé, une matière moulable le cas échéant moussable et le cas échéant durcissable, une pièce moulée durcissable, une matière moulable moussée, une pièce moulée moussée ou un système en mousse moulé sur place à un composant ou deux composants.

12. Procédé de préparation du matériau composite de polyuréthanne-oxyde de graphite selon au moins l'une des revendications précédentes, **caractérisé en ce que** l'on intercale au moins un polyol dans l'oxyde de graphite et dans le phyllosilicate et ensuite, le composé d'intercalation de l'oxyde de graphite et le composé d'intercalation du phyllosilicate obtenus sont mis à réagir avec au moins un polyisocyanate pour obtenir le polyuréthanne ou l'on intercale au moins un polyisocyanate dans l'oxyde de graphite et dans le phyllosilicate et ensuite, le composé d'intercalation de l'oxyde de graphite et le composé d'intercalation du phyllosilicate obtenus sont mis à réagir avec au moins un polyol pour obtenir le polyuréthanne.

13. Procédé selon la revendication 12, **caractérisé en ce que** l'oxyde de graphite et le phyllosilicate présentent une taille moyenne des particules allant de 0,2 µm à 150 µm, de préférence de 2 µm à 100 µm.

14. Procédé selon la revendication 12 ou 13, **caractérisé en ce que** l'on soumet l'oxyde de graphite, avant l'intercalation du au moins un polyol, à un traitement avec un sel d'ammonium quaternaire et/ou un tensioactif cationique, de préférence le bromure de cétyltriéthylammonium, pour modifier la polarité de l'oxyde de graphite.

15. Procédé selon les revendications 12 à 14, **caractérisé en ce que** l'on lave l'oxyde de graphite, avant l'intercalation du au moins un polyol, avec de l'eau distillée jusqu'à un pH allant de 6 à 8, de préférence 7.

16. Procédé selon au moins l'une des revendications 12 à 15, **caractérisé en ce que** l'on réalise la réaction de formation du polyuréthanne en présence d'un ou de plusieurs catalyseurs pour la réaction du polyol avec le polyisocyanate, et le cas échéant au moins un porogène chimique ou physique, un additif inorganique de protection contre le feu, un agent organique de protection contre les flammes, ainsi que les charges, auxiliaires et/ou additifs usuels en les quantités usuelles.

17. Utilisation du composé composite de polyuréthanne-oxyde de graphite selon les revendications 1 à 11 comme matériau de protection contre les flammes et pour l'étanchéification ignifuge de percements et/ou traversées dans des parois, sols et/ou plafonds de bâtiments.
